# EUROPÄISCHE PATENTSCHRIFT

(11) **EP 3 738 699 B1**
(45) Veröffentlichungstag und Bekanntmachung des Hinweises auf die Patenterteilung: **18.12.2024**
(21) Anmeldenummer: 20174774.8
(22) Anmeldetag: 14.05.2020
(51) Int. Cl.: B23B 31/02, B23B 31/117

(54) **SPANNEINRICHTUNG ZUM SPANNEN EINES BAUTEILS**
CLAMPING DEVICE FOR CLAMPING A COMPONENT
DISPOSITIF DE SERRAGE PERMETTANT DE SERRER UN COMPOSANT

(30) Priorität: 14.05.2019 DE 102019112629
(43) Veröffentlichungstag der Anmeldung: 18.11.2020
(73) Patentinhaber: Schunk GmbH & Co. KG Spann- und Greiftechnik, 74348 Lauffen am Neckar (DE)
(72) Erfinder: Schöttle, Daniel, 74336 Botenheim (DE)
(74) Vertreter: Paul & Albrecht Patentanwälte PartG mbB

(56) Entgegenhaltungen:
- EP-A2- 0 344 761
- CN-A- 103 801 985
- CN-A- 106 271 880
- DE-A1- 102015 220 533
- DE-A1- 102016 006 803
- US-A1- 2016 097 687

## Beschreibung

Die vorliegende Erfindung betrifft eine Spanneinrichtung in Einklang mit dem Oberbegriff des Anspruchs 1. Ein Beispiel einer solchen Spanneinrichtung ist in DE 10 2016 006 803 A1 offenbart.

Derartige Spanneinrichtungen zum Fixieren beispielsweise eines Werkzeugs in einer Werkzeugmaschine sind in unterschiedlichen Ausgestaltungen bekannt und dienen dazu, ein Werkzeug wie beispielsweise ein Fräs- oder Bohrwerkzeug zur spanenden Bearbeitung eines Werkstücks an einer Arbeitsspindel einer Werkzeugmaschine zu fixieren. Eine solche Spanneinrichtung umfasst üblicherweise einen Grundkörper, der eine Spannachse definiert, und in einem vorderen Endbereich einen Spannbereich, in dem das zu spannende Bauteil, kraftschlüssig gehalten ist.

Zunehmend werden derartige Spanneinrichtungen mit Sensoren versehen, um während eines Bearbeitungsvorgangs verschiedene Betriebsparameter erfassen zu können. Beispielsweise kann eine derartige Spanneinrichtung einen Beschleunigungssensor aufweisen, um Vibrationen bei einem Bearbeitungsvorgang zu erfassen. Derartige Vibrationen können auftreten, wenn ein in die Spanneinrichtung eingesetztes Werkzeug zur spanenden Bearbeitung verschlissen ist.

Ebenso kann ein Temperatursensor vorgesehen sein, um eine möglicherweise unzureichende Kühlung eines eingesetzten Werkzeugs zu erkennen. Ferner können mittels geeigneter Sensoren Verformungen des Grundkörpers bestimmt werden, woraus Rückschlüsse auf die auftretenden Zerspanungskräfte möglich sind. Die von derartigen Sensoren ermittelten Daten können über eine geeignete Übertragungsvorrichtung an eine zentrale Maschinensteuerung gesendet werden, so dass gegebenenfalls die Bearbeitungsparameter angepasst werden können.

Eine derartige, als Werkzeughalter ausgebildete Spanneinrichtung ist aus der DE 10 2015 220 533 A1 vorbekannt. Diese dient dem Fixieren eines Werkzeugs an der Arbeitsspindel einer Werkzeugmaschine und umfasst einen eine Spannachse definierenden Grundkörper. An dessen vorderem Endbereich ist ein Spannbereich mit einer zur vorderen Stirnfläche des Grundkörpers hin offenen zentralen Aufnahme für den Schaft eines zu spannenden Werkzeugs ausgebildet. Ferner sind in dem Grundkörper an verschiedenen Positionen Aufnahmeräume für Sensoren vorgesehen. Konkret sind die Aufnahmeräume außerhalb der zentralen Aufnahme angeordnet und über in dem Grundkörper ausgebildete Kanäle mit nach außen offenen Ausnehmungen zur Unterbringung einer Energieversorgungsvorrichtung und/oder einer Signalübertragungsvorrichtung verbunden.

Weitere Werkzeughalter sind beispielsweise aus der EP 0 344 761 A2 und aus der US 2016/0097687 A1 vorbekannt. Wenngleich sich ein derartiger Werkzeughalter grundsätzlich bewährt hat, so wird doch zu Teilen als nachteilig angesehen, dass bei hohen Drehzahlen extreme Fliehkräfte auf die Sensoren wirken und deren Funktionsweise und/oder deren Lebensdauer beeinträchtigen.

Aufgabe der vorliegenden Erfindung ist somit, eine Spanneinrichtung zum Spannen eines Bauteils bereitzustellen, bei welcher die vorstehend genannten Nachteile vermieden werden.

Diese Aufgabe ist bei dieser Spanneinrichtung der eingangs genannten Art durch die Merkmale des Anspruchs 1 gelöst.

Der Erfindung liegt somit die grundsätzliche Überlegung zugrunde, einen Aufnahmeraum in einer Spanneinrichtung vorzusehen, der von der Spannachse durchsetzt wird und somit eine Anordnung des Sensorelements zentrisch zur Spannachse ermöglicht. Da die Fliehkraft bei einem sich drehenden Körper proportional mit dem Abstand von der Drehachse zunimmt, wirkt vorliegend durch eine zentrische Anordnung des Sensorelements selbst bei hohen Drehzahlen keine Fliehkraft auf dieses. Dadurch, dass der Aufnahmeraum zumindest zu einer radialen Außenfläche des Grundkörpers hin offen ist, wird ein einfaches Einsetzen und Entnehmen eines Sensorelements ermöglicht.

In weiterer Ausgestaltung der Erfindung kann der Aufnahmeraum den Grundkörper in radialer Richtung vollständig durchsetzen und an seinen beiden Enden zur Außenfläche des Grundkörpers hin offen sein. Ein solcher radial durchgängiger Aufnahmeraum vereinfacht wiederum das Einsetzen und gegebenenfalls Auswechseln eines Sensorelements, sowie die Fertigung, da die Herstellung einer radialen Durchgangsbohrung einfach bewerkstelligt werden kann. Desweiteren verhindert ein solcher den Grundkörper radial vollständig durchsetzender Aufnahmeraum aufgrund seiner Symmetrie zur Spannachse eine Unwucht, die sich bei hohen Drehzahlen negativ auf den Rundlauf der Spanneinrichtung auswirken würde.

Alternativ kann der Aufnahmeraum den Grundkörper lediglich teilweise radial durchsetzen und zu einem Ende hin zur Außenfläche des Grundkörpers hin offen sein. Demzufolge ist vorgesehen, dass der Aufnahmeraum nur von einer Seite her zugänglich ist. Das andere, verschlossene Ende kann dabei eine Anschlagfläche für einen einzusetzenden Gegenstand, beispielsweise ein Sensorelement bilden.

Der Grundkörper kann eine zentrale axiale Durchgangsbohrung aufweisen, die von dem Aufnahmeraum radial durchsetzt wird. Eine derartige axiale Durchgangsbohrung kann beispielsweise dazu dienen, durch den Grundkörper axial Kühlschmierstoffe zu leiten, wenn beispielsweise ein Werkzeug eingespannt ist und zur Bearbeitung in einer Werkzeugmaschine verwendet wird. Dabei kann es erforderlich sein, den Aufnahmeraum fluiddicht von einer solchen axialen Durchgangsbohrung zu trennen, um eine Einwirkung auf ein in den Aufnahmeraum eingesetztes Sensorelement zu vermeiden.

Konkret kann der Aufnahmeraum als radiale Durchgangsbohrung oder als radiale Sackbohrung in dem Grundkörper ausgebildet sein, in welche ein Rohrelement eingesetzt und positioniert ist, in dem ein Sensorelement platzierbar ist. Ein derartiges in eine Durchgangsbohrung oder eine Sackbohrung des Grundkörpers eingesetztes Rohrelement stellt eine einfache Möglichkeit dar, eine fluiddichte Abschirmung für ein eingesetztes oder einzusetzendes Sensorelement zu realisieren. Des Weiteren besitzt ein Rohrelement eine definierte Abmessung, wodurch ein einfaches Einbringen eines Sensorelements gewährleistet ist. Die Sackbohrung kann dabei von einer radialen Außenfläche ausgehend in die zentrale axiale Durchgangsbohrung münden oder sich darüber hinaus bis in den sich anschließenden radialen Abschnitt des Grundkörpers hinein erstrecken.

Das Rohrelement kann zu beiden Seiten hin offen sein oder zu einem Ende hin offen und zum anderen Ende hin verschlossen sein. Ein durchgängig offenes Rohrelement ermöglicht eine symmetrische Ausgestaltung und einen Zugang zu dem inneren Bereich des Rohrelements von beiden radialen Seiten, wohingegen ein zu einem Ende hin verschlossenes Rohrelement nur von einer Seite her zugänglich ist. Bevorzugt schließt das Rohrelement bündig mit zumindest einer radialen Außenfläche des Grundkörpers ab. Ein einseitig verschlossenes Rohrelement kann sowohl in eine radiale Durchgangsbohrung, als auch in eine radiale Sackbohrung eingesetzt sein. Das Rohrelement kann insbesondere eine derartige Länge aufweisen, dass es den Grundkörper radial nicht vollständig durchsetzt.

Das Rohrelement kann sich zumindest teilweise in die zentrale axiale Durchgangsbohrung hinein erstrecken und diese insbesondere vollständig radial durchsetzen. Vorteilhaft kann ein einseitig verschlossenes Rohrelement die zentrale axiale Durchgangsbohrung nicht vollständig durchsetzen, sondern innerhalb der axialen Durchgangsbohrung enden, so dass ein gegenüber einem durchgängigen Rohrelement vergrößerter Strömungsquerschnitt beispielsweise für Kühlschmierstoffe durch die zentrale axiale Durchgangsbohrung verbleibt. Gleichermaßen ist es denkbar, dass ein einseitig verschlossenes Rohrelement sich bis in den jenseits der zentralen axialen Durchgangsbohrung liegenden radialen Bereich des Grundkörpers hinein erstreckt.

Das Rohrelement kann dabei einen kreisförmigen Querschnitt, oder einen rechteckigen, insbesondere quadratischen Querschnitt, oder einen abgerundeten rechteckigen Querschnitt aufweisen. Ein kreisförmiger Querschnitt des Rohrelements bietet sich dann an, wenn eine radiale Durchgangsbohrung in dem Grundkörper spanend mittels eines Bohrers hergestellt wird. Gleichzeitig sind Rohrelemente mit einem kreisförmigen Querschnitt in einer Vielzahl von Abmessungen verfügbar, so dass ein derartiges Rohrelement kostengünstig zu beschaffen ist. Ein rechteckiger, insbesondere quadratischer Querschnitt ermöglicht wiederum ein einfaches Platzieren eines korrespondierenden Sensorelements und sichert dieses zusätzlich gegen ein Verdrehen. Ein abgerundeter rechteckiger Querschnitt kann ebenfalls verwendet werden, wenn ein Sensorelement gegen Verdrehen gesichert werden soll. Des Weiteren kann eine dazu korrespondierende Durchgangsbohrung mittels eines geeigneten Fräswerkzeugs auf relativ einfache Weise hergestellt werden.

In weiterer Ausgestaltung kann das Rohrelement mit dem Grundkörper stoffschlüssig verbunden, insbesondere mit diesem verklebt, verlötet oder verschweißt, und/oder kraftschlüssig, insbesondere in die radiale Sack- oder Durchgangsbohrung eingepresst, verbunden sein, und/oder formschlüssig, insbesondere in die radiale Sack- oder Durchgangsbohrung eingeschraubt, verbunden sein. Eine Fixierung des Rohrelements in der radialen Bohrung ist zweckmäßig, um ein Verschieben während des Betriebs, welches insbesondere bei hohen Drehzahlen und Vibrationen auftreten kann, zu verhindern. Zur Realisierung einer stoffschlüssigen Verbindung kann das Rohrelement mit dem Grundkörper verklebt sein. Der Vorteil in einer Klebeverbindung besteht darin, dass unterschiedliche Werkstoffe miteinander verbunden werden können, somit das Rohrelement aus einem gänzlich anderen Material als der Grundkörper bestehen kann. Beispielsweise kann der Grundkörper aus einem metallischen Werkstoff, insbesondere einem Stahlwerkstoff bestehen, das Rohrelement kann aber gewichtsparend und kostengünstig herstellbar aus einem Kunststoff oder beispielsweise einem Aluminiumwerkstoff bestehen. Ferner kann die Klebeverbindung so ausgestaltet sein, dass ein moderates Erhitzen ein Lösen und somit ein Austauschen des Rohrelements ermöglicht. Alternativ kann das Rohrelement verlötet oder verschweißt sein, was eine dazu geeignete Werkstoffkombination zwischen Rohrelement und Grundkörper voraussetzt. Derartige Verbindungen sind nicht mehr ohne weiteres im Nachhinein lösbar. Alternativ kommen auch kraftschlüssige Verbindungen infrage, insbesondere ein Einpressen in die radiale Bohrung. In diesem Fall ist der Außendurchmesser des Rohrelements geringfügig größer als der Innendurchmesser der radialen Bohrung, so dass sich eine Übermaßpassung ergibt. Die Montage kann durch unmittelbares Einpressen unter Krafteinwirkung erfolgen, jedoch auch durch das Erwärmen des Grundkörpers, bzw. Abkühlen des Rohrelements.

Alternativ können das Rohrelement und der Grundkörper einteilig ausgebildet sein und insbesondere mittels eines generativen Fertigungsverfahrens, bevorzugt mittels selektiven Laserschmelzens hergestellt werden. Eine solche einteilige Ausgestaltung kann vorteilhaft sein, da so ein Herauslösen des Rohrelements ausgeschlossen ist. Gerade bei der Wahl eines generativen Fertigungsverfahrens bietet sich eine solche Ausgestaltung an, da ein derartiges Verfahren die Erzeugung nahezu beliebiger Konturen und Formen ermöglicht.

Erfindungsgemäß umfasst die Spanneinrichtung ferner ein Sensorelement, welches in dem Aufnahmeraum zentrisch zur Spannachse angeordnet ist. Konkret kann das Sensorelement einen Temperatursensor und/oder einen Bewegungssensor, insbesondere einen Sensor zur Erfassung der Drehzahl der Spanneinrichtung und/oder einen Drucksensor und/oder einen Verformungssensor und/oder einen Beschleunigungssensor umfassen. Grundsätzlich kann ein in dem Aufnahmeraum angeordnetes Sensorelement einen oder mehrere Sensoren umfassen. Wird die erfindungsgemäße Spanneinrichtung zum Fixieren eines Werkzeugs an einer Werkzeugmaschine verwendet, kann über einen Drehzahlsensor indirekt die Schnittgeschwindigkeit ermittelt werden. Des Weiteren kann ein Sensorelement, welches einen Beschleunigungssensor enthält, auftretende Vibrationen erfassen. Ein Temperatursensor ermöglicht es, zu hohe Temperaturen des Grundkörpers zu erkennen. Insbesondere, wenn der Grundkörper über eine axiale Durchgangsbohrung verfügt, die von dem Aufnahmeraum radial durchsetzt wird und welche dazu dient, der Aufnahme Kühlschmiermittel zuzuleiten, kann über einen im Aufnahmeraum angeordneten Temperatursensor die Kühlmitteltemperatur erfasst werden.

Ferner kann die erfindungsgemäße Spanneinrichtung eine Energiequelle umfassen, die zur Spannungs- oder Stromversorgung des Sensorelements mit diesem verbunden ist, welche insbesondere mindestens eine Batteriezelle, bevorzugt eine aufladbare Batteriezelle umfasst. Eine derartige Energiequelle ist erforderlich, um ein Sensorelement autark von einer Werkzeugmaschine oder anderen externen Energieversorgungen mit elektrischer Energie zu versorgen. Die Verwendung einer wiederaufladbaren Batteriezelle hat dabei den Vorteil, nicht ausgetauscht werden zu müssen, sondern beispielsweise kabelgebunden oder drahtlos von außen aufgeladen werden zu können, insbesondere wenn die Spanneinrichtung gerade nicht in Gebrauch ist.

Des Weiteren kann die Spanneinrichtung eine Datenübertragungsvorrichtung umfassen, welche mit dem Sensorelement gekoppelt und ausgebildet ist, vom Sensorelement erfasste Messdaten insbesondere drahtlos zu übertragen, wobei die Datenübertragungsvorrichtung insbesondere zur Verwendung in einem drahtlosen Netzwerk und/oder zur Verbindung mit dem Internet geeignet ist, und mit der Energiequelle verbunden ist. Durch eine derartige Datenübertragungsvorrichtung können die vom Sensorelement erfassten Messdaten an einen außerhalb der Spanneinrichtung liegenden Empfänger übertragen werden. Durch eine drahtlose Übertragung wird dabei bei einer sich drehenden Spanneinrichtung die Störanfälligkeit gegenüber einer kontaktierenden Übertragung erheblich minimiert. Die Datenübertragung kann dabei insbesondere zu einer Maschinensteuerung hin erfolgen, wodurch eine Regelung wichtiger Betriebsparameter ermöglicht wird. Erkennt das Sensorelement beispielsweise, dass aufgrund des Verschleißes eines in die Spanneinrichtung eingesetzten Werkzeugs Vibrationen auftreten, so können die Betriebsparameter, beispielsweise die Drehzahl und/oder die Vorschubgeschwindigkeit, angepasst werden, um trotzdem eine qualitativ hochwertige Werkstückbearbeitung zu gewährleisten.

Gemäß einer Weiterbildung ist in der radialen Außenfläche des Grundkörpers mindestens eine Ausnehmung vorgesehen, in welche der Aufnahmeraum mündet. Konkret kann sich die Ausnehmung ringförmig über den gesamten Umfang des Grundkörpers erstrecken und der Aufnahmeraum an seinen beiden Enden in die Ausnehmung münden. Alternativ kann der Grundkörper zwei insbesondere symmetrisch zur Spannachse einander gegenüberliegende Ausnehmungen aufweisen, zwischen denen sich der Aufnahmeraum erstreckt. Bevorzugt besitzen diese Ausnehmungen eine rechteckige Grundform.

Derartige an den Aufnahmeraum außenseitig angrenzende Ausnehmungen dienen insbesondere dazu, die Energiequelle und die Datenübertragungsvorrichtung teilweise oder vollständig aufzunehmen. Dadurch wird vermieden, dass die Energiequelle und die Datenübertragungsvorrichtung radial aus dem Grundkörper vorragen und somit einer von außen stattfindenden mechanischen Einwirkung ausgesetzt sein können. Des Weiteren ermöglicht die Anordnung der Datenübertragungsvorrichtung in der mindestens einen Ausnehmung eine einfache drahtlose Datenübertragung, da die Signale den Grundkörper nicht durchdringen müssen, sondern direkt von außen empfangen werden können.

Vorteilhaft ist die mindestens eine Ausnehmung durch ein Abdeckelement gegen das Eindringen von Schmutz und/oder Flüssigkeiten von außen abgedichtet. Wird beispielsweise die erfindungsgemäße Spanneinrichtung zum Fixieren eines Werkzeugs in einer Werkzeugmaschine verwendet, so kommt der Grundkörper zwangsweise in Kontakt mit Kühlschmiermitteln und Werkstückspänen. Aus diesem Grund ist eine Abdichtung gegenüber der Umgebung erforderlich.

Das Abdeckelement kann derart ausgestaltet und/oder an dem Grundkörper angebracht sein, dass ein Lösen bei in Rotation versetzter Spanneinrichtung infolge der auftretenden Fliehkräfte verhindert wird. Konkret kann das Abdeckelement an dem Grundkörper verschraubt oder verschraubbar sein. Alternativ kann das Abdeckelement Sicherungsmittel aufweisen, um ein Lösen des Abdeckelements bei in Rotation versetzter Spanneinrichtung infolge der auftretenden Fliehkräfte zu verhindern. Die Sicherungsmittel können dabei an dem Abdeckelement ausgebildete Formschlusselemente umfassen, die mit korrespondierenden, in der Ausnehmung ausgebildeten Gegenelementen in Eingriff stehen oder bringbar sind, insbesondere diese hintergreifen.

Eine Sicherung des Abdeckelements ist aufgrund der bei einer Drehung der Spanneinrichtung auftretenden Fliehkräfte zwingend erforderlich. Beispielsweise kann das Abdeckelement eine Außenkontur aufweisen, die mit einer korrespondierenden, in der Ausnehmung ausgebildeten Gegenkontur in Eingriff steht. Dabei kann es sich um eine sich radial erstreckende Verzahnung handeln, die mit einer entsprechenden, an den sich radial erstreckenden Wänden der Ausnehmung ausgebildeten Gegenverzahnung in Eingriff steht oder bringbar ist. Ein nicht vollständig ringförmig geschlossenes, insbesondere geschlitztes Abdeckelement hat dabei den Vorteil, dass es leicht elastisch aufweitbar ist und in Folge dessen in einfacher Art an dem Grundkörper angebracht werden kann.

Alternativ kann das Abdeckelement ringförmig ausgebildet sein und den Grundkörper über seinen vollen Umfang oder zumindest nahezu über seinen vollen Umfang umgreifen. Dieser Ausgestaltung liegt die Überlegung zugrunde, dass bei einem ringförmig ausgebildeten Abdeckelement der Schwerpunkt mit der Spannachse zusammenfällt und somit die Gefahr eines Lösens bei einer in Rotation versetzten Spanneinrichtung ausgeschlossen ist.

In weiterer Ausgestaltung kann der Grundkörper in seinem hinteren axialen Endbereich eine Maschinenschnittstelle mit einem Befestigungskonus und einem Ringflansch aufweisen. Derartige Maschinenschnittstellen sind beispielsweise als Hohlschaftkegel (HSK) ausgebildet und nach der DIN 69893-1 normiert. Alternativ kann der Grundkörper auch einen Steilkegel (SK) nach DIN 2080 als Maschinenschnittstelle umfassen.

Bevorzugt ist der Aufnahmeraum für ein Sensorelement in einem axial vor der Maschinenschnittstelle liegenden Abschnitt des Grundkörpers angeordnet. Dadurch wird eine einfache Zugänglichkeit für ein mögliches Empfangsgerät für die von der Datenübertragungsvorrichtung gesendeten Signale geschaffen.

Die erfindungsgemäße Spanneinrichtung kann als Warmschrumpffutter ausgebildet sein. In diesem Fall ist die Aufnahme als Bohrung ausgebildet, deren Durchmesser geringfügig kleiner ist als der Außendurchmesser eines zu spannenden Bauteils. Soll das Bauteil in die Aufnahme eingebracht werden, so wird der Grundkörper erwärmt, so dass sich infolge der Wärmedehnung der Durchmesser der Aufnahme vergrößert. Das Bauteil kann dann mit Spiel in die Aufnahme eingesetzt werden, bevor es beim Abkühlen des Grundkörpers kraftschlüssig gespannt wird. Derartige Warmschrumpffutter sind bei wiederholtem Spannen von Bauteilen einem Verschleiß unterworfen, welcher zu Vibrationen führen kann. In diesem Fall kann ein Sensorelement beispielsweise dazu eingesetzt werden, diese Vibrationen und somit den Verschleiß frühzeitig zu erkennen und somit entweder ein rechtzeitiges Austauschen der Spanneinrichtung oder die Korrektur von Betriebsparametern zu ermöglichen.

Alternativ kann die Spanneinrichtung als Hydrodehn-Spannfutter ausgebildet sein, wobei die Aufnahme von einer mit einem Hyraulikmittel beaufschlagbaren Druckkammer ringförmig umgeben ist, wobei zwischen der Aufnahme und der Druckkammer eine dünne Wandung vorgesehen ist, die durch eine Druckerhöhung des Drucks in der Druckkammer elastisch nach innen verformbar ist, um einen in die Aufnahme eingesetzten Werkzeugschaft kraftschlüssig zu fixieren. Bei einem derartigen Hydrodehn-Spannfutter ist die Aufnahme üblicherweise ebenfalls als Bohrung ausgebildet. Dabei ist der Durchmesser der Bohrung geringfügig größer als der Durchmesser des zu spannenden Bauteils, so dass dieses ohne Probleme in die Aufnahmebohrung eingesetzt werden kann. Zum Spannen wird das in der Druckkammer befindliche Hydraulikmittel durch geeignete Spannmittel mit einem Druck beaufschlagt, so dass sich die Wandung der Aufnahmebohrung radial nach innen verformt und das in die Aufnahmebohrung eingesetzte Bauteil kraftschlüssig fixiert.

Des Weiteren können in dem Spannbereich Kühlschmiermittelkanäle ausgebildet sein, die geeignet sind, einem in die Aufnahme eingesetzten Bauteil, Kühlschmiermittel zuzuleiten. Beispielsweise können an der vorderen Stirnseite des Grundkörpers Auslassöffnungen vorgesehen sein, durch welche Kühlschmiermittel direkt dem eingesetzten Bauteil zugeleitet wird. Die Zufuhr von Kühlschmiermittel kann dabei über eine axiale Durchgangsbohrung des Grundkörpers oder über einen seitlich angeordneten Einlass beispielsweise im Bereich der Maschinenschnittstelle erfolgen.

Hinsichtlich weiterer vorteilhafter Ausgestaltungen der Erfindung wird auf die Unteransprüche sowie auf die nachfolgende Beschreibung eines Ausführungsbeispiels unter Bezugnahme auf die beiliegende Zeichnung verwiesen.

In der Zeichnung zeigt
- Figur 1: eine Spanneinrichtung gemäß der vorliegenden Erfindung in einer Längsschnittansicht;
- Figur 2: die Spanneinrichtung aus Figur 1 in einer Detailseitenansicht;
- Figur 3: eine Spanneinrichtung gemäß der vorliegenden Erfindung in einer alternativen Ausführungsform in einer Detailseitenansicht;
- Figur 4: eine Spanneinrichtung gemäß der vorliegenden Erfindung in einer weiteren alternativen Ausführungsform in einer Detailseitenansicht.

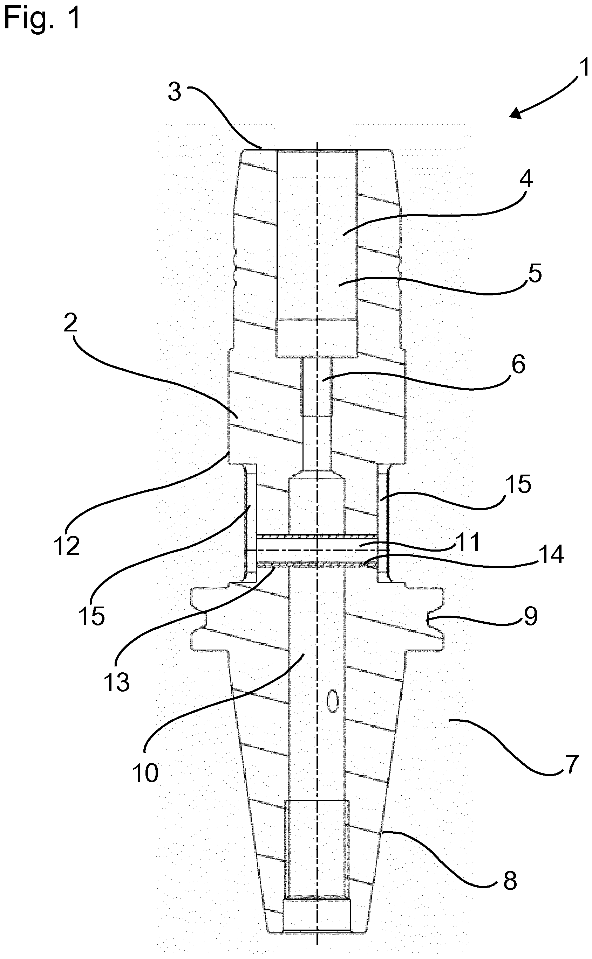

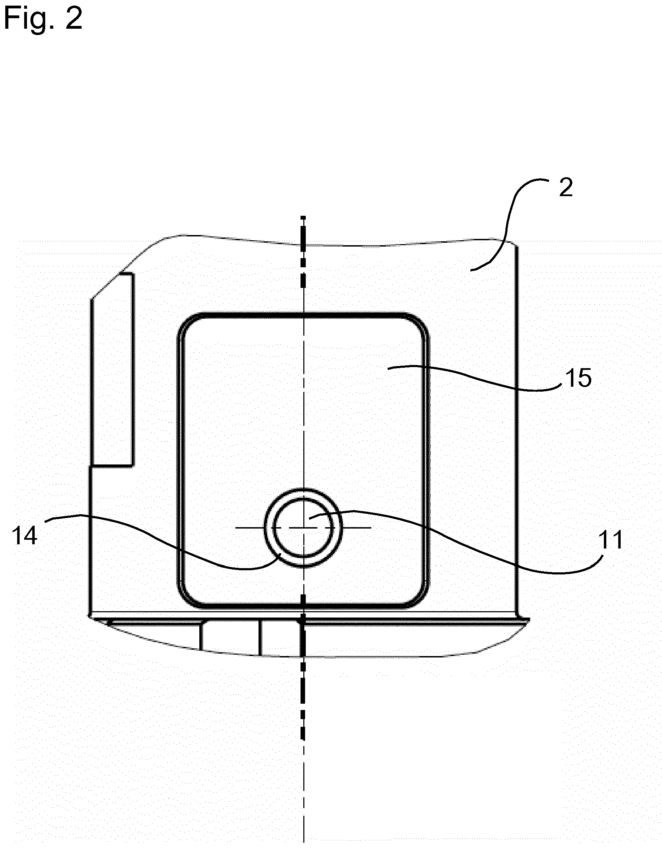

Die Figuren 1 und 2 zeigen eine als Werkzeughalter ausgebildete Spanneinrichtung 1 gemäß der vorliegenden Erfindung zum Fixieren eines Werkzeugs an einer Werkzeugmaschine.

Die Spanneinrichtung 1 besitzt einen eine zentrale Spannachse X definierenden Grundkörper 2, an dessen vorderem Endbereich ein Spannbereich mit einer zur vorderen Stirnfläche 3 hin offenen zentralen Aufnahme 4 ausgebildet ist. Konkret ist die Spanneinrichtung 1 als Warmschrumpffutter ausgeführt, so dass die Aufnahme 4 als zylindrische Spannbohrung 5 zur Aufnahme eines Werkzeugschafts ausgebildet ist. Rückseitig schließt sich an die Spannbohrung 5 eine Gewindebohrung 6 mit einem gegenüber der Spannbohrung 5 verringerten Durchmesser an, welche eine zusätzliche Fixiermöglichkeit für einen Werkzeugschaft bildet.

In seinem hinteren axialen Endbereich weist der Grundkörper 2 eine Maschinenschnittstelle 7 mit einem Befestigungskonus 8 und einem Ringflansch 9 auf. Der Befestigungskonus 8 ist dabei als Steilkegel (SK) nach DIN 2080 ausgeführt. Der Ringflansch 9 ermöglicht ein Greifen der Spanneinrichtung 1 beispielsweise bei einem Werkzeugwechsel in einer Werkzeugmaschine. Des weiteren weist der Grundkörper 2 eine axiale Durchgangsbohrung 10 auf.

In dem Grundkörper 2 ist ein axial vor der Maschinenschnittstelle 7 Aufnahmeraum 11 für ein Sensorelement ausgebildet. Dieser durchsetzt den Grundkörper 2 in radialer Richtung vollständig und ist an seinen beiden Enden zur Außenfläche 12 des Grundkörpers 2 hin offen. Konkret ist der Aufnahmeraum 11 als radiale Durchgangsbohrung 13 in dem Grundkörper 2 ausgebildet. In diese ist ein Rohrelement 14 mit einem kreisförmigen Querschnitt eingesetzt. Vorliegend ist das Rohrelement 14 in die radiale Durchgangsbohrung 13 des Grundkörpers 2 eingepresst. Alternativ ist es jedoch auch denkbar, das Rohrelement 14 mit dem Grundkörper 2 stoffschlüssig zu verbinden, insbesondere mit diesem zu verkleben, zu verlöten oder zu verschweißen.

Das Rohrelement 14 durchsetzt dabei die axiale Durchgangsbohrung 10 in radialer Richtung, so dass der Aufnahmeraum 11 von der zentralen Spannachse X durchsetzt wird. Dadurch wird es möglich, ein Sensorelement zentrisch zur Spannachse X zu platzieren.

In der radialen Außenfläche 12 des Grundkörpers sind ferner zwei einander symmetrisch zur Spannachse X gegenüberliegende Ausnehmungen 15 vorgesehen, zwischen denen sich der Aufnahmeraum 11 erstreckt. Die Ausnehmungen 15 besitzen eine rechteckige Grundform und können dazu dienen, eine mit einem zentrisch platzierten Sensorelement verbundene Energiequelle zur Spannungs- oder Stromversorgung, bzw. eine Datenübertragungsvorrichtung teilweise oder vollständig aufzunehmen. In einem solchen Fall können die Ausnehmungen 15 durch ein Abdeckelement gegen das Eindringen von Schmutz und/oder Flüssigkeiten von außen abgedichtet sein. Dabei kann das Abdeckelement derart ausgestaltet und/oder an den Grundkörper 2 angebracht sein, dass ein Lösen bei in Rotation versetzter Spanneinrichtung 1 infolge der auftretenden Fliehkräfte verhindert wird.

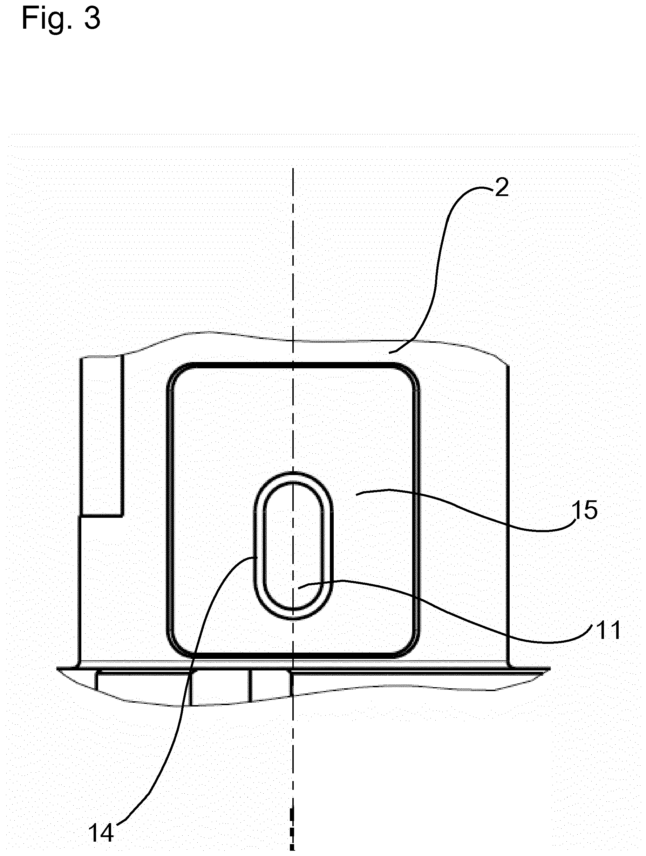

In Figur 3 ist eine alternative Ausführungsform einer erfindungsgemäßen Spanneinrichtung 1 dargestellt. Diese unterscheidet sich von der in den Figuren 1 und 2 dargestellten Spanneinrichtung 1 lediglich dadurch, dass das Rohrelement 14 keinen kreisförmigen, sondern einen abgerundeten rechteckigen Querschnitt aufweist. Dadurch wird es möglich, ein größeres Sensorelement in dem Aufnahmeraum 11 zu platzieren.

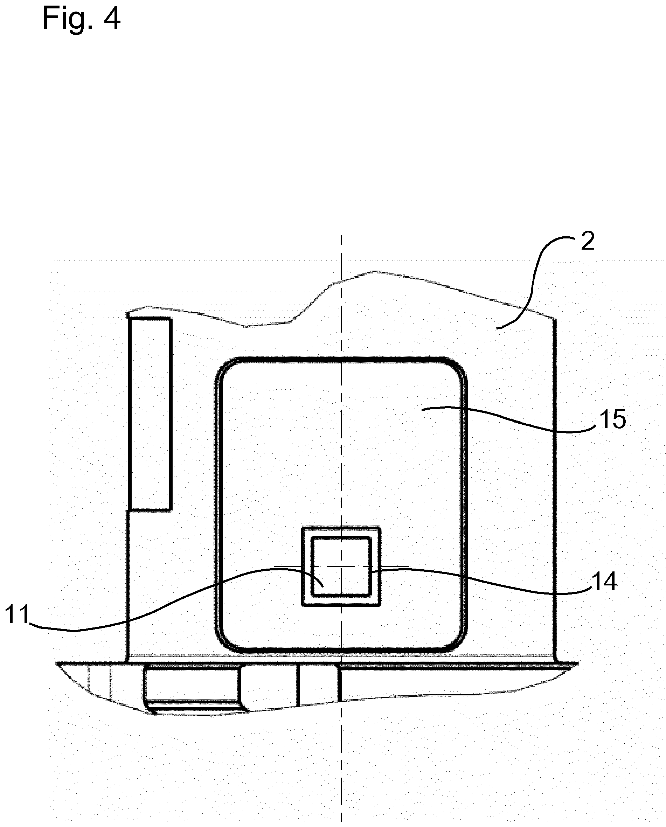

Die in Figur 4 dargestellte Spanneinrichtung 1 unterscheidet sich von den in den Figuren 1 bis 3 dargestellten Spanneinrichtungen dadurch, dass das Rohrelement 14 einen quadratischen Querschnitt aufweist.

Ein in den Aufnahmeraum 11 eingesetztes Sensorelement kann beispielsweise einen Beschleunigungssensor aufweisen, mittels dessen es möglich ist, auftretende Vibrationen zu erkennen. Ferner kann in dem Aufnahmeraum 11 ein Temperatursensor platziert werden, welcher geeignet ist, die Temperatur eines die axiale Durchgangsbohrung 10 durchströmenden Kühlmittels zu messen. Durch eine Datenübertragungsvorrichtung ist es möglich, diese Messdaten an einen maschinenfest angeordneten Empfänger zu senden und für die Steuerung eines Bearbeitungsvorgangs zu nutzen.

### Bezugszeichen

- 1: Spanneinrichtung
- 2: Grundkörper
- 3: vordere Stirnfläche
- 4: Aufnahme
- 5: Spannbohrung
- 6: Gewindebohrung
- 7: Maschinenschnittstelle
- 8: Befestigungskonus
- 9: Ringflansch
- 10: axiale Durchgangsbohrung
- 11: Aufnahmeraum
- 12: radiale Außenfläche
- 13: radiale Durchgangsbohrung
- 14: Rohrelement
- 15: Ausnehmung
- X: Spannachse

## Patentansprüche

1. Spanneinrichtung (1) zum Spannen eines Bauteils, insbesondere zum Fixieren eines Werkzeugs an einer Werkzeugmaschine, mit
einem eine Spannachse (X) definierenden Grundkörper (2), an dessen vorderem Endbereich ein Spannbereich mit einer zur vorderen Stirnfläche (3) des Grundkörpers (2) hin offenen zentralen Aufnahme (4) für ein zu spannendes Bauteil, insbesondere für einen Werkzeugschaft ausgebildet ist,
wobei in dem Grundkörper (2) ein Aufnahmeraum (11) für ein Sensorelement ausgebildet ist, wobei sich der Aufnahmeraum (11) von einer radialen Au-ßenfläche (12) des Grundkörpers (2) in diesen hinein erstreckt und von der Spannachse (X) durchsetzt wird, um ein Sensorelement zentrisch zur Spannachse (X) aufnehmen zu können, **dadurch gekennzeichnet, dass** die Spanneinrichtung ferner ein Sensorelement umfasst, welches in dem Aufnahmeraum (11) zentrisch zur Spannachse (X) angeordnet ist.

2. Spanneinrichtung (1) nach Anspruch 1, **dadurch gekennzeichnet, dass** der Aufnahmeraum (11) den Grundkörper (2) in radialer Richtung vollständig durchsetzt und an seinen beiden Enden zur Außenfläche (12) des Grundkörpers (2) hin offen ist, oder dass der Aufnahmeraum den Grundkörper lediglich teilweise radial durchsetzt und zu einem Ende hin zur Außenfläche des Grundkörpers hin offen ist.

3. Spanneinrichtung (1) nach Anspruch 2, **dadurch gekennzeichnet, dass** der Grundkörper (2) eine zentrale axiale Durchgangsbohrung (10) aufweist, die von dem Aufnahmeraum (11) radial durchsetzt wird.

4. Spanneinrichtung (1) nach Anspruch 2 oder 3, **dadurch gekennzeichnet, dass** der Aufnahmeraum (11) als radiale Durchgangsbohrung oder als radiale Sackbohrung in dem Grundkörper (2) ausgebildet ist, in welche ein Rohrelement (14) eingesetzt und positioniert ist, in dem ein Sensorelement platzierbar ist, wobei das Rohrelement (14) bevorzugt zu seinen beiden Enden hin offen ist oder zu einem Ende hin offen und zum anderen Ende hin verschlossen ist.

5. Spanneinrichtung (1) nach Anspruch 3 und Anspruch 4, **dadurch gekennzeichnet, dass** sich das Rohrelement (14) zumindest teilweise in die zentrale axiale Durchgangsbohrung (10) hinein erstreckt und diese insbesondere vollständig radial durchsetzt.

6. Spanneinrichtung (1) nach Anspruch 4 oder 5, **dadurch gekennzeichnet, dass** das Rohrelement (14) einen kreisförmigen Querschnitt oder einen rechteckigen, insbesondere quadratischen Querschnitt oder einen abgerundeten rechteckigen Querschnitt aufweist.

7. Spanneinrichtung (1) nach einem der Ansprüche 4 bis 6, **dadurch gekennzeichnet, dass** das Rohrelement (14) mit dem Grundkörper (2) stoffschlüssig verbunden, insbesondere mit diesem verklebt, verlötet oder verschweißt, und/oder kraftschlüssig, insbesondere in die radiale Sack- oder Durchgangsbohrung (13) eingepresst, verbunden ist und/oder formschlüssig, insbesondere in die radiale Sack- oder Durchgangsbohrung eingeschraubt, verbunden ist, oder dass das Rohrelement (14) und der Grundkörper (2) einteilig ausgebildet sind und insbesondere mittels eines generativen Fertigungsverfahrens, bevorzugt mittels selektiven Laserschmelzens, hergestellt wurden.

8. Spanneinrichtung (1) nach einem der vorherigen Ansprüche, **dadurch gekennzeichnet, dass** das Sensorelement einen Temperatursensor und/oder einen Bewegungssensor, bevorzugt einen Sensor zur Erfassung der Drehzahl der Spanneinrichtung (1), und/oder einen Drucksensor und/oder einen Verformungssensor und/oder einen Beschleunigungssensor umfasst.

9. Spanneinrichtung (1) nach Anspruch 8, **dadurch gekennzeichnet, dass** diese ferner eine Energiequelle umfasst, die zur Spannungs- oder Stromversorgung des Sensorelements mit diesen verbunden ist, welche insbesondere mindestens eine Batteriezelle, bevorzugt eine wiederaufladbare Batteriezelle umfasst.

10. Spanneinrichtung (1) nach Anspruch 9, **dadurch gekennzeichnet, dass** die Spanneinrichtung (1) ferner eine Datenübertragungsvorrichtung umfasst, welche mit dem Sensorelement gekoppelt und ausgebildet ist, vom Sensorelement erfasste Messdaten insbesondere drahtlos zu übertragen, wobei die Datenübertragungsvorrichtung bevorzugt zur Verwendung in einem drahtlosen Netzwerk und/oder zur Verbindung mit dem Internet geeignet ist, und welche mit der Energiequelle verbunden ist.

11. Spanneinrichtung (1) nach einem der vorherigen Ansprüche, **dadurch gekennzeichnet, dass** in der radialen Außenfläche (12) des Grundkörpers (2) mindestens eine Ausnehmung (15) vorgesehen ist, in welche der Aufnahmeraum (11) mündet, wobei, insbesondere, sich die Ausnehmung (15) ringförmig über den gesamten Umfang des Grundkörpers (2) erstreckt und der Aufnahmeraum (11) an seinen beiden Enden in die Ausnehmung (15) mündet, oder der Grundkörper (2) zwei bevorzugt symmetrisch zur Spannachse (X) einander gegenüberliegende Ausnehmungen (15) aufweist, zwischen denen sich der Aufnahmeraum (11) erstreckt, wobei die Ausnehmungen (15) bevorzugt eine rechteckige Grundform besitzen.

12. Spanneinrichtung (1) nach Anspruch 10 und Anspruch 11, **dadurch gekennzeichnet, dass** die Energiequelle und die Datenübertragungsvorrichtung teilweise oder vollständig in der mindestens einen Ausnehmung (15) angeordnet sind.

13. Spanneinrichtung (1) nach einem der Ansprüche 11 oder 12, **dadurch gekennzeichnet, dass** die mindestens eine Ausnehmung (15) durch ein Abdeckelement gegen das Eindringen von Schmutz und/oder Flüssigkeiten von außen abgedichtet ist, wobei, insbesondere, das Abdeckelement derart ausgestaltet und/oder an dem Grundkörper (2) angebracht ist, dass ein Lösen bei in Rotation versetzter Spanneinrichtung (1) in Folge der auftretenden Fliehkräfte verhindert wird, wobei, bevorzugt, das Abdeckelement an dem Grundkörper (2) verschraubt oder verschraubbar ist oder das Abdeckelement ringförmig ausgebildet ist und den Grundkörper (2) über seinen vollen Umfang oder zumindest nahezu über seinen vollen Umfang umgreift oder das Abdeckelement Sicherungsmittel aufweist, um ein Lösen des Abdeckelements bei in Rotation versetzter Spanneinrichtung (1) in Folge der auftretenden Fliehkräfte zu verhindern, wobei, besonders bevorzugt, die Sicherungsmittel an dem Abdeckelement ausgebildete Formschlusselemente umfassen, die mit korrespondierenden, in der Ausnehmung (15) ausgebildeten Gegenelementen in Eingriff stehen oder bringbar sind, insbesondere diese hintergreifen.

14. Spanneinrichtung (1) nach einem der vorherigen Ansprüche, **dadurch gekennzeichnet, dass** der Grundkörper (2) in seinem hinteren axialen Endbereich eine Maschinenschnittstelle (7) mit einem Befestigungskonus (8) und einem Ringflansch (9) aufweist, wobei der Aufnahmeraum (11) für ein Sensorelement insbesondere in einem axial vor der Maschinenschnittstelle (7) liegenden Abschnitt des Grundkörpers (2) angeordnet ist.

## Claims

1. Clamping device (1) for clamping a component, in particular for fixing a tool on a machine tool, with
a base body (2) defining a clamping axis (X), at the front end region of which a clamping region is formed with a central receptacle (4) open towards the front end face (3) of the base body (2) for a component to be clamped, in particular for a tool shank,
wherein a receiving space (11) for a sensor element is formed in the base body (2), wherein the receiving space (11) extends from a radial outer surface (12) of the base body (2) into the latter and is penetrated by the clamping axis (X) in order to be able to receive a sensor element centrally with respect to the clamping axis (X), **characterized in that** the clamping device further comprises a sensor element which is arranged in the receiving space (11) centrally with respect to the clamping axis (X).

2. Clamping device (1) according to claim 1, **characterized in that** the receiving space (11) passes completely through the base body (2) in the radial direction and is open at its two ends towards the outer surface (12) of the base body (2), or **in that** the receiving space passes only partially radially through the base body and is open at one end towards the outer surface of the base body.

3. Clamping device (1) according to claim 2, **characterized in that** the base body (2) has a central axial through-hole (10) through which the receiving space (11) passes radially.

4. Clamping device (1) according to claim 2 or 3, **characterized in that** the receiving space (11) is designed as a radial through bore or as a radial blind bore in the base body (2), into which a tubular element (14) is inserted and positioned, in which a sensor element can be placed, the tubular element (14) preferably being open towards its two ends or being open towards one end and closed towards the other end.

5. Clamping device (1) according to claim 3 and claim 4, **characterized in that** the tubular element (14) extends at least partially into the central axial through-hole (10) and in particular passes radially through it completely.

6. Clamping device (1) according to claim 4 or 5, **characterized in that** the tubular element (14) has a circular cross-section or a rectangular, in particular square cross-section or a rounded rectangular cross-section.

7. Clamping device (1) according to one of claims 4 to 6, **characterized in that** the tubular element (14) is connected to the base body (2) in a material-locking manner, in particular bonded, soldered or welded thereto, and/or in a force-locking manner, in particular pressed into the radial blind or through bore (13), and/or is positively connected, in particular screwed into the radial blind or through bore, or that the tubular element (14) and the base body (2) are formed in one piece and were manufactured in particular by means of a generative manufacturing process, preferably by means of selective laser melting.

8. Clamping device (1) according to one of the previous claims, **characterized in that** the sensor element comprises a temperature sensor and/or a movement sensor, preferably a sensor for detecting the rotational speed of the tensioning device (1), and/or a pressure sensor and/or a deformation sensor and/or an acceleration sensor.

9. Clamping device (1) according to claim 8, **characterized in that** it further comprises an energy source which is connected to the sensor element for supplying voltage or power to the latter, which in particular comprises at least one battery cell, preferably a rechargeable battery cell.

10. Clamping device (1) according to claim 9, **characterized in that** the clamping device (1) further comprises a data transmission device which is coupled to the sensor element and is designed to transmit measurement data acquired by the sensor element, in particular wirelessly, the data transmission device preferably being suitable for use in a wireless network and/or for connection to the Internet, and which is connected to the energy source.

11. Clamping device (1) according to one of the preceding claims, **characterized in that** at least one recess (15) is provided in the radial outer surface (12) of the base body (2), into which recess the receiving space (11) opens, wherein, in particular, the recess (15) extends annularly over the entire circumference of the base body (2) and the receiving space (11) opens into the recess (15) at its two ends, or the base body (2) has two recesses (15), preferably symmetrically opposite the clamping axis (X), between which the receiving space (11) extends, the recesses (15) preferably having a rectangular basic shape.

12. Clamping device (1) according to claim 10 and claim 11, **characterized in that** the energy source and the data transmission device are partially or completely arranged in the at least one recess (15).

13. Clamping device (1) according to one of claims 11 or 12, **characterized in that** the at least one recess (15) is sealed by a cover element against the ingress of dirt and/or liquids from the outside, wherein, in particular, the cover element is designed and/or attached to the base body (2) in such a way that loosening is prevented when the clamping device (1) is set in rotation as a result of the centrifugal forces occurring, wherein, preferably, the cover element is screwed or can be screwed to the base body (2) or the cover element is ring-shaped and embraces the base body (2) over its entire circumference or at least almost over its entire circumference or the cover element has securing means, in order to prevent loosening of the cover element when the clamping device (1) is set in rotation as a result of the centrifugal forces occurring, wherein, particularly preferably, the securing means comprise positive-locking elements which are formed on the cover element and which are or can be brought into engagement with corresponding mating elements formed in the recess (15), in particular engage behind the latter.

14. Clamping device (1) according to one of the preceding claims, **characterized in that** the base body (2) has, in its rear axial end region, a machine interface (7) with a fastening cone (8) and an annular flange (9), the receiving space (11) for a sensor element being arranged in particular in a section of the base body (2) located axially in front of the machine interface (7).

## Revendications

1. Dispositif de serrage (1) pour le serrage d'un composant, en particulier pour la fixation d'un outil sur une machine-outil, avec
un corps de base (2) définissant un axe de serrage (X), sur la zone d'extrémité avant duquel est réalisée une zone de serrage avec un logement central (4) ouvert vers la face frontale avant (3) du corps de base (2) pour un composant à serrer, en particulier pour une tige d'outil,
un espace de réception (11) pour un élément de détection étant formé dans le corps de base (2), l'espace de réception (11) s'étendant depuis une surface extérieure radiale (12) du corps de base (2) dans celui-ci et étant traversé par l'axe de serrage (X) afin de pouvoir recevoir un élément de détection de manière centrée par rapport à l'axe de serrage (X), **caractérisé en ce que** le dispositif de serrage comprend en outre un élément capteur est disposé dans l'espace de réception (11) de manière centrée par rapport à l'axe de serrage (X).

2. Dispositif de serrage (1) selon la revendication 1, **caractérisé en ce que** l'espace de réception (11) traverse complètement le corps de base (2) dans le sens radial et est ouvert à ses deux extrémités vers la surface extérieure (12) du corps de base (2), ou **en ce que** l'espace de réception ne traverse que partiellement le corps de base dans le sens radial et est ouvert à une extrémité vers la surface extérieure du corps de base.

3. Dispositif de serrage (1) selon la revendication 2, **caractérisé en ce que** le corps de base (2) présente un trou traversant axial central (10) qui est traversé radialement par l'espace de réception (11).

4. Dispositif de serrage (1) selon la revendication 2 ou 3, **caractérisé en ce que** l'espace de réception (11) est réalisé sous la forme d'un alésage radial traversant ou d'un alésage radial borgne dans le corps de base (2), dans lequel est inséré et positionné un élément tubulaire (14) dans lequel peut être placé un élément capteur, l'élément tubulaire (14) étant de préférence ouvert vers ses deux extrémités ou ouvert vers une extrémité et fermé vers l'autre extrémité.

5. dispositif de serrage (1) selon la revendication 3 et la revendication 4, **caractérisé en ce que** l'élément tubulaire (14) s'étend au moins partiellement dans l'alésage axial central traversant (10) et le traverse notamment entièrement radialement.

6. Dispositif de serrage (1) selon la revendication 4 ou 5, **caractérisé en ce que** l'élément tubulaire (14) présente une section transversale circulaire ou une section transversale rectangulaire, en particulier carrée, ou une section transversale rectangulaire arrondie.

7. Dispositif de serrage (1) selon l'une des revendications 4 à 6, **caractérisé en ce que** l'élément tubulaire (14) est relié au corps de base (2) par liaison de matière, en particulier collé, brasé ou soudé avec celui-ci, et/ou par liaison de force, en particulier enfoncé dans le trou borgne ou traversant radial (13), et/ou est relié par complémentarité de forme, en particulier vissé dans le trou radial borgne ou traversant, ou **en ce que** l'élément tubulaire (14) et le corps de base (2) sont réalisés en une seule pièce et ont été fabriqués en particulier au moyen d'un procédé de fabrication générative, de préférence au moyen d'une fusion sélective au laser.

8. Dispositif de serrage (1) selon l'une des revendications précédentes, **caractérisé en ce que** l'élément capteur comprend un capteur de température et/ou un capteur de mouvement, de préférence un capteur pour détecter la vitesse de rotation du dispositif de serrage (1), et/ou un capteur de pression et/ou un capteur de déformation et/ou un capteur d'accélération.

9. Dispositif de serrage (1) selon la revendication 8, **caractérisé en ce qu'**il comprend en outre une source d'énergie qui est reliée à l'élément capteur pour l'alimentation en tension ou en courant de l'élément capteur, laquelle source d'énergie comprend notamment au moins un élément de batterie, de préférence un élément de batterie rechargeable.

10. dispositif de serrage (1) selon la revendication 9, **caractérisé en ce que** le dispositif de serrage (1) comprend en outre un dispositif de transmission de données qui est couplé à l'élément de détection et qui est conçu pour transmettre, en particulier sans fil, des données de mesure détectées par l'élément de détection, le dispositif de transmission de données étant de préférence adapté pour être utilisé dans un réseau sans fil et/ou pour être connecté à l'Internet, et qui est connecté à la source d'énergie.

11. Dispositif de serrage (1) selon l'une des revendications précédentes, **caractérisé en ce qu'**il est prévu dans la surface extérieure radiale (12) du corps de base (2) au moins un évidement (15) dans lequel débouche l'espace de réception (11), l'évidement (15) s'étendant, en particulier, de manière annulaire sur toute la périphérie du corps de base (2) et l'espace de réception (11) débouchant à ses deux extrémités dans l'évidement (15), ou le corps de base (2) présente deux évidements (15) opposés l'un à l'autre, de préférence symétriquement par rapport à l'axe de serrage (X), entre lesquels s'étend l'espace de réception (11), les évidements (15) ayant de préférence une forme de base rectangulaire.

12. Dispositif de serrage (1) selon la revendication 10 et la revendication 11, **caractérisé en ce que** la source d'énergie et le dispositif de transmission de données sont disposés partiellement ou entièrement dans ledit au moins un évidement (15).

13. Dispositif de serrage (1) selon l'une des revendications 11 ou 12, **caractérisé en ce que** l'au moins un évidement (15) est rendu étanche par un élément de recouvrement contre la pénétration d'impuretés et/ou de liquides de l'extérieur, l'élément de recouvrement étant, en particulier, conçu et/ou monté sur le corps de base (2) de telle sorte qu'un desserrage est empêché lorsque le dispositif de serrage (1) est mis en rotation en raison des forces centrifuges qui se produisent, l'élément de recouvrement étant, de préférence, l'élément de recouvrement est vissé ou peut être vissé sur le corps de base (2) ou l'élément de recouvrement est de forme annulaire et entoure le corps de base (2) sur toute sa périphérie ou au moins presque, ou l'élément de recouvrement présente des moyens de sécurité, pour empêcher un détachement de l'élément de recouvrement lorsque le dispositif de serrage (1) est mis en rotation à la suite des forces centrifuges qui se produisent, sachant que, de préférence, les moyens de sécurité comprennent des éléments à engagement positif formés sur l'élément de recouvrement, qui sont ou peuvent être mis en prise avec des éléments antagonistes correspondants formés dans l'évidement (15), en particulier qui s'engagent derrière ceux-ci.

14. Dispositif de serrage (1) selon l'une des revendications précédentes, **caractérisé en ce que** le corps de base (2) présente dans sa zone d'extrémité axiale arrière une interface machine (7) avec un cône de fixation (8) et une bride annulaire (9), l'espace de réception (11) pour un élément capteur étant notamment disposé dans une section du corps de base (2) située axialement devant l'interface machine (7).
